# EUROPÄISCHE PATENTANMELDUNG

(11) **EP 1 441 136 A1**
(43) Veröffentlichungstag der Anmeldung: **28.07.2004**
(21) Anmeldenummer: 03405023.7
(22) Anmeldetag: 22.01.2003
(51) Int. Cl.: F16C 29/06, F16C 29/04

(54) **Zubehör für einen Wagen einer Linearbewegungsführung**

(71) Anmelder: Schneeberger Holding AG, 4914 Roggwil (CH)
(72) Erfinder: Dann, Thomas, 76307 Karlsbad 2 (DE)
(74) Vertreter: EGLI-EUROPEAN PATENT ATTORNEYS

(57) **Zusammenfassung**

Für eine Zubehöreinrichtung, wie beispielsweise eine Schmierplatte (11), die zur Befestigung an einer Stirnseite eines Wagens (3) einer wälzkörperbasierten Linearbewegungsführung vorgesehen ist, wobei der Wagen (3) auf einer Schiene (2) angeordnet und relativ zu dieser beweglich ist, wird als Befestigungsmittel eine Schnappverbindung vorgeschlagen. Hiermit kann eine einfache und schnelle Montage bzw. Demontage der Zubehöreinrichtung erreicht werden.

## Beschreibung

Die Erfindung betrifft eine Zubehöreinrichtung für einen Wagen einer Linearbewegungsführung, insbesondere einer wälzkörperbasierten Linearbewegungsführung, bei der der Wagen auf einer Schiene angeordnet und relativ zu dieser beweglich ist, wobei die Zubehöreinrichtung ein Mittel aufweist, das zur Befestigung der Zubehöreinrichtung im Bereich einer der Stirnseiten des Wagens vorgesehen ist. Die Erfindung betrifft zudem ein System von mehreren Zubehöreinrichtungen sowie einen Wagen einer Linearbewegungsführung.

Die seit langem und in unterschiedlichster Weise bekannten Linearbewegungsführungen weisen stets eine Schiene auf, auf der sich ein Wagen mittels Wälzkörpern abstützt und gegenüber der Schiene bewegbar ist. Die Schiene ist hierbei in der Regel zur Befestigung an einem Maschinengestell und der Wagen zur Befestigung an einem zu bewegenden Maschinenbauteil vorgesehen. Bei den gebräuchlichsten Ausführungsformen von den durch die Erfindung betroffenen Linearbewegungsführungen weist der Wagen im Querschnitt eine U-Form auf. Die Wälzkörper sind in mehreren endlosen Wälzkörperumläufen angeordnet und stützen den Wagen im Bereich der Schenkel der U-Form auf Tragflächen der Schiene ab, die an den Seiten der Schiene ausgebildet sind.

Zur Erhöhung der Lebensdauer werden in den meisten Fällen den Wälzkörpern über den Wagen Schmiermittel zugeführt, mit denen ein Verschleiss der Wälzkörper vermindert werden soll. Hierdurch wird auf der Schiene ein Schmiermittelfilm gebildet. Zudem werden derartige Linearbewegungen oftmals unter sehr widrigen Bedingungen eingesetzt, bei denen Schmutz und Späne auf die Laufflächen der Schiene gelangen. Diese Partikel bzw. Gegenstände können die Führung beschädigen.

Vor allem zur Vermeidung solcher Beschädigungen und eines zu grossen Verlustes an Schmiermittel werden an den Stirnseiten der Wagen Abstreifeinrichtungen befestigt. Letztere können mehrere Bestandteile aufweisen, beispielsweise Blech- und Gummiabstreifer, die über die Oberseite und Seitenflächen der Schiene geführt werden.

Wagen von Linearbewegungsführungen weisen in der Regel einen metallischen Grundkörper auf, an dem mehrere Kunststoffteile angebracht sind. So ist es beispielsweise heute üblich, an den Stirnseiten des metallischen Grundkörpers Teile der Umlenkkanäle der Wälzkörperumläufe als ein- oder mehrteilige Kunststoffstirnkappen auszubilden und zu montieren. Das Funktionszubehör, wie beispielsweise Abstreifer und Schmiereinrichtungen, wird dann zusammen mit diesen Kunststoffbauteilen am Grundkörper des Wagens oder an den Kunststoffstirnkappen mittels Schraubverbindungen befestigt. Da Abstreifer Verschleissteile sind, müssen diese von Zeit zu Zeit ausgetauscht werden.

Nicht zufrieden stellen kann der bei vorbekannten Linearbewegungsführungen hiermit verbundene Aufwand. So kann es sogar erforderlich sein, die Linearbewegungsführung zumindest teilweise zu demontieren, um einen Austausch oder eine Ergänzung von Zubehör durchführen zu können. Aber selbst wenn nur an den Stirnseiten der Wagen Bauteile gelöst bzw. befestigt werden müssen, so hat sich dies aufgrund der in der Regel beengten Verhältnisse als schwierig und aufwendig erwiesen.

Der Erfindung liegt deshalb die Aufgabe zugrunde, eine Möglichkeit für eine einfachere Montage bzw. Demontage von an einer Stirnseite eines Wagens einer Linearbewegungsführung vorgesehenem Funktionszubehör zu schaffen. Im Zusammenhang mit der Erfindung sollen mit Funktionszubehör solche Bauteile verstanden werden, die an Stirnseiten eines Wagens angefügt werden und nicht zur Abtragung der von der Linearbewegungsführung aufzunehmenden mechanischen Belastung beitragen.

Unabhängig von der jeweiligen Funktion des Zubehörs der eingangs genannten Art, kann die Aufgabe erfindungsgemäss dadurch gelöst werden, dass das Zubehör mittels zumindest einer Schnappverbindung lösbar befestigt wird.

Obwohl an Linearbewegungsführungen sehr hohe Genauigkeitsanforderungen gestellt werden, hat es sich überraschenderweise gezeigt, dass sich mit konstruktiv einfachen Schnappverbindungen einerseits eine ausreichend stabile und doch positionsgenaue Befestigung des Zubehörs für die hochpräzisen Linearbewegungsführungen erreichen lässt. Andererseits ermöglichen Schnappverbindungen mit nur wenigen Handgriffen ein Lösen oder Befestigen des Zubehörs.

Eine besonders einfache Montage und Demontage lässt sich mit einer konstruktiven Ausgestaltung erzielen, bei der die Schnappverbindung eine federelastische Lasche bzw. Bügel aufweist. Dieses federelastische Element sollte zum Eingriff in eine Hinterschneidung vorgesehen sein und hinter dieser mit einer Vorspannkraft zu liegen kommen. Um die Schnappverbindung zu lösen, kann ein Anheben der Lasche mittels einem Schraubenzieher oder einem anderen flachen klingenartigen Gegenstand ausreichen. Hierzu sind somit weder bestimmte Werkzeuge noch zeitaufwendige Handhabungsschritte erforderlich.

Eine besonders günstige erfindungsgemässe Ausgestaltung sieht vor, dass die Schnappverbindung an den Seitenflächen der erfindungsgemässen Zubehöreinrichtungen ausgebildet ist. Diese Flächen sind selbst dann in der Regel noch ohne weiteres zugänglich, wenn die Linearbewegungsführung in einer Maschine oder Anlage eingebaut ist.

Als besonders zweckmässig hat sich eine bestimmte erfindungsgemässe Ausführungsform erwiesen, bei der zur Befestigung einer Zubehöreinrichtung jeweils zwei federelastische Laschen vorgesehen sind, die vorzugsweise an zwei unterschiedlichen, von aussen zugänglichen, Seitenflächen einer Zubehöreinrichtung angeordnet sind. Diese federelastischen Laschen können im nicht montierten Zustand eine Öffnungsweite ausbilden, die kleiner ist als die Breite des Bauteils, an dem die Zubehöreinrichtung befestigt werden soll. Im montierten Zustand sind die Laschen federelastisch ausgelenkt und klemmen das Bauteil zwischen sich ein. Die Schnappverbindungen weisen bei dieser Ausführungsform zudem vorzugsweise jeweils eine Hinterschneidung auf, in die die jeweilige Lasche im montierten Zustand eingreift. Die Hinterschneidungen sind vorzugsweise an dem Bauteil ausgebildet, an dem die jeweilige Zubehöreinrichtung befestigt werden soll. Es ist grundsätzlich aber auch möglich, zumindest eine Hinterschneidung an der Zubehöreinrichtung und zumindest eine Lasche am Bauteil vorzusehen.

Um eine positionsgenaue Anordnung, die den bei Linearbewegungsführungen üblichen Präzisionsanforderungen genügt, zu erzielen, kann es zudem zweckmässig sein, zusätzlich zu einer oder mehreren Schnappverbindungen auch zumindest ein Positionierhilfsmittel vorzusehen. Derartige Positionier- oder Zentrierhilfsmittel können beispielsweise ineinander greifende Hülsen und Ausnehmungen sein, die durch einen Formschluss zumindest in einer Richtung Relativbewegungen einer Zubehöreinrichtung verhindern.

Um auch bei mehreren an einer Stirnseite vorgesehenen Zubehöreinrichtungen eine einfache Montage bzw. Demontage zu erreichen, kann ein System von Zubehöreinrichtungen vorgesehen sein, bei dem jede Zubehöreinrichtung jeweils Bestandteile von zwei Schnappverbindungen aufweist. Der Bestandteil der einen Schnappverbindung kann zur Befestigung der jeweiligen Zubehöreinrichtung selbst vorgesehen sein. Der Bestandteil der anderen Schnappverbindung kann hingegen zur Befestigung einer - in Bezug auf die Längsbewegungsachse der Führung - nachfolgenden, vorzugsweise einer unmittelbar nachfolgenden, Zubehöreinrichtung dienen. Eine solche Ausgestaltung ermöglicht es, nur bestimmte Zubehöreinrichtungen zu demontieren. Zudem können mit sehr geringem Aufwand jederzeit weitere Zubehöreinrichtungen an einen Wagen angefügt werden, selbst wenn dieser bereits auf einer Schiene und in eine Maschine eingebaut ist.

Bei bestimmten Einsatzbedingungen kann es vorteilhaft sein, zusätzlich zu einem, beispielsweise in einer Stirnplatte des Wagens angeordneten, Abstreifer, einen weiteren Abstreifer vorzusehen. In einer bevorzugten Ausführungsform kann deshalb vorgesehen sein, dass der weitere Abstreifer an den Wagen geklemmt wird. Die lösbare Befestigung des Abstreifers kann zumindest eine Schnappverbindung aufweisen, die durch das Befestigungsmittel und das Bauteil des Wagens erzeugt wird, an welches das Befestigungsmittel den Abstreifer klemmt. In einer konstruktiv günstigen, da unaufwendigen möglichen Ausführungsform kann das Befestigungsmittel mit einer wesentlichen plattenförmigen Klammer versehen sein, die zumindest eine Lasche aufweist. Die Lasche kann vorzugsweise seitlich am Abstreifer vorbei zu dem Bauteil geführt sein und dort in eine Hinterschneidung eingreifen.

Weitere bevorzugte Ausgestaltungen der Erfindung ergeben sich aus den abhängigen Ansprüchen.

Die Erfindung wird anhand eines in den Figuren schematisch dargestellten Ausführungsbeispiels näher erläutert. Es zeigen:
- Fig. 1: eine erfindungsgemässe Linearbewegungsführung in einer Explosionsdarstellung;
- Fig. 2: eine teilweise geschnittene Vorderansicht der Linearbewegungsführung aus Fig. 1;
- Fig. 3: eine perspektivische Darstellung einer Stirnplatte mit einer daran befestigten Schmierplatte;
- Fig. 4: eine perspektivische Darstellung einer Federstahlklammer der Linearbewegungsführung aus Fig. 1;
- Fig. 5: die Schmierplatte aus Fig. 1 und Fig. 3 in einer perspektivischen Darstellung mit Blick auf die Rückseite.

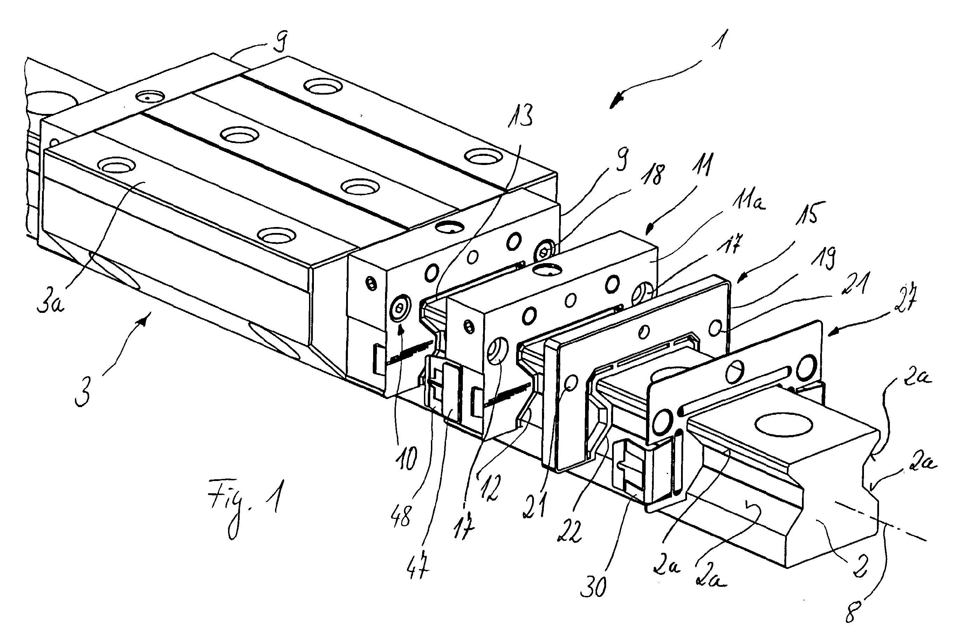

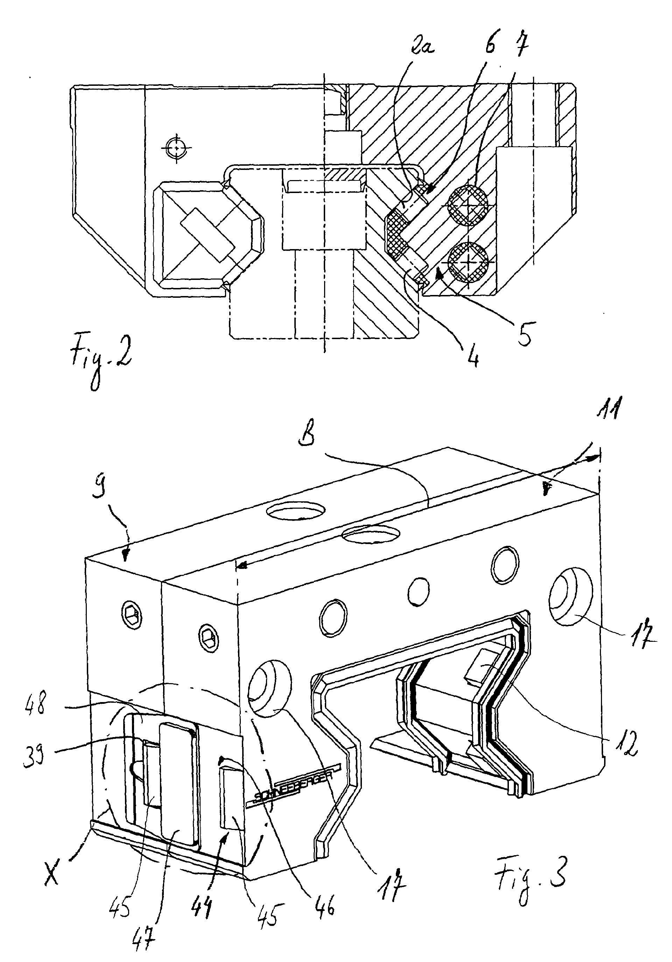

Die erfindungsgemässe Linearbewegungsführung 1 gemäss Fig. 1 weist eine Profilschiene 2 und einen auf der Profilschiene 2 längs verfahrbaren Wagen 3 auf. Im Ausführungsbeispiel ist der Wagen 3 über lediglich in Fig. 2 gezeigte und in Fig. 1 nicht näher dargestellte Wälzkörper 4 längsverschiebbar. Die im Ausführungsbeispiel als Rollen ausgebildeten Wälzkörper 4 sind im Wagen 3 in in sich geschlossenen Wälzkörperumläufe 5 angeordnet und stützen sich auf seitlichen Laufflächen 2a der Schiene 2 ab.

Ein Wälzkörperumlauf weist hierzu eine Tragzone 6 auf, innerhalb der die Wälzkörper 4 während ihres Kontaktes mit der Lauffläche 2a der Schiene 2 auch am Wagen 3 anliegen. Ebenso wie ein Rücklaufkanal 7 jedes Wälzkörperumlaufes verläuft die Tragzone 6 parallel zu einer Längsbewegungsachse 8 der Führung. Der Rücklaufkanal 7 befindet sich in einem metallischen Grundkörper 3a des hier gezeigten Wagens, an dessen beiden Stirnseiten jeweils eine Stirnplatte 9 befestigt ist. Innerhalb der mehrteiligen Stirnplatte 9 ist für jeden Wälzkörperumlauf jeweils ein nicht näher dargestellter Umlenkkanal angeordnet. Die Bauteile der Umlenkkanäle können am Grundkörper 3a selbst befestigt sein. Ebenso wie die Rücklaufkanäle 7 weisen auch die Umlenkkanäle im Querschnitt eine kanalartige Ausnehmung auf, die zumindest näherungsweise dem Querschnitt der jeweils vorgesehenen Wälzkörper 4 entspricht. Die beiden Umlenkkanäle eines Wälzkörperumlaufs verbinden jeweils die Tragzone 6 mit dem Rücklaufkanal 7 und ermöglichen hierdurch eine Zirkulation der Wälzkörper 4 in ihrem Wälzkörperumlauf.

Die Stirnplatte 9 ist an ihrer dem Grundkörper des Wagens abgewandten Seite mit zwei parallel zueinander verlaufenden Positionierausnehmungen 10 mit zylindrischem Querschnitt versehen. In die Stirnplatte 9 ist auch ein erster Abstreifer 13 integriert, der gegen die Schiene 2 anliegt. In der Darstellung von Fig. 1 ist eine Schmiermittelversorgung des Wagens nicht zu erkennen, für die in der Stirnplatte 9 Anschlussgewinde und Verteilkanäle vorgesehen sind.

Des Weiteren kann der dargestellte Wagen 3 an zumindest einer, vorzugsweise an jeder, Stirnseite mindestens eine Schmierplatte 11 aufweisen, die zur Aufbringung von Schmieröl oder anderen Schmierstoffen auf die Laufflächen 2a dient. Die in der jeweiligen Bewegungsrichtung vordere Schmierplatte 11 bringt somit an der von ihr jeweils überfahrenen Stelle der Schiene einen Schmiermittelfilm auf die Laufflächen auf, bevor die Wälzkörper diese Stelle erreichen. Hierzu kann in den Schmierplatten ein Schmiermittelvorrat vorhanden sein. Über ein die Querschnittsform der Schiene aufweisendes und an dieser anliegendes poröses Material 12, wie beispielsweise Schaumstoff, kann das Schmiermittel aufgetragen werden.

Wie Fig. 1 zu entnehmen ist, befindet sich im dargestellten Ausführungsbeispiel die Schmierplatte 11 zwischen der Stirnplatte 9 mit den Umlenkkanälen und einem Abstreifer 15. Die Breite und Höhe der Stirnplatte 9 stimmt hierbei mit der Breite und Höhe eines Kunststoffträgers 11a der Schmierplatte 11 überein.

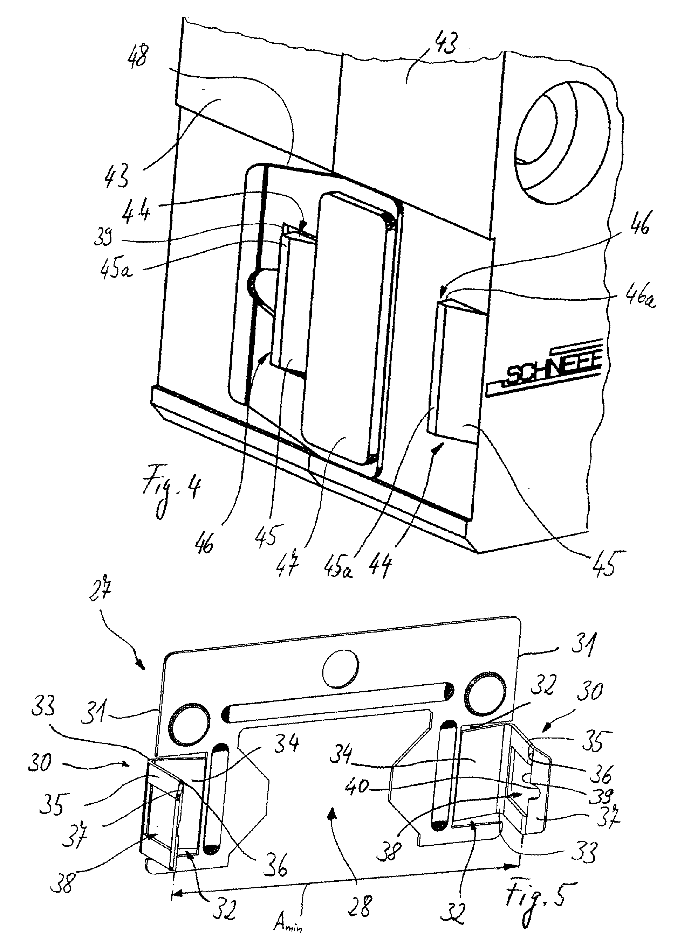

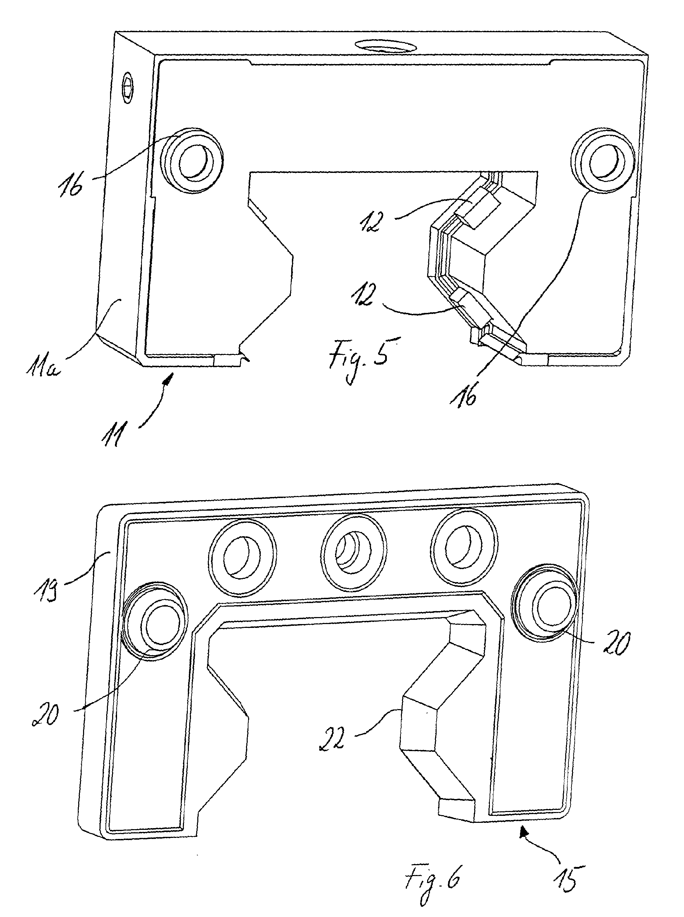

Der Kunststoffträger 11a weist auf einer Rückseite zwei mit Abstand zueinander angeordnete Positionierhülsen 16 auf (Fig. 5). Auf seiner Vorderseite ist er hingegen mit zylindrischen Positionierausnehmungen 17 versehen (Fig. 1 und Fig. 3). Hierbei verläuft jeweils eine Positionierhülse 16 und eine Positionierausnehmung 17 entlang der gleichen Symmetrieachse, die wiederum parallel zur Längsbewegungsachse 8 ausgerichtet ist. Ein Radius der Aussenfläche der Positionierhülsen 16 ist so bemessen, dass die Positionierhülsen mit nur geringem Spiel in die Positionierausnehmungen 17 der Stirnplatte 9 angeordnet werden können. Hierdurch kann eine definierte Relativposition des Kunststoffträgers 11a gegenüber der Stirnplatte 9 sichergestellt werden. Ein Innendurchmesser jeder Positionierhülse 16 kann dabei vorzugsweise so bemessen sein, dass sie jeweils eine Schraube 18 aufnehmen kann, mit der die Stirnplatte 9 am Grundkörper 3a befestigt ist.

Wie Fig. 1 zeigt, weist die Linearbewegungsführung 1 im Bereich der beiden Stirnseiten 6 des Wagens 3 üblicherweise jeweils zumindest einen optional vorgesehenen Zusatzabstreifer 15 auf. Dieser, in Fig. 6 näher dargestellte, Zusatzabstreifer 15 hat vor allem die Aufgabe, mit seiner Abstreiferlippe 22 Verunreinigungen von den Bereichen der Oberfläche (insbesondere den Laufflächen 2a) der Schiene 2 abzustreifen, über die der Wagen 3 geführt wird, bevor der Wagen über die jeweiligen Schienenabschnitte gelangt. Ein Längsverlauf der Abstreiferlippe 22 entspricht somit der Querschnittsform der Schiene 2. Im montierten Zustand liegt damit die beispielsweise aus einem Kunststoff bestehende Abstreiferlippe 22 federelastisch an der Oberseite und den Laufflächen 2a der Schiene 2 und wischt bei einer Längsbewegung des Wagens 3 auf der Schiene über deren Oberfläche. Damit können mit der Zusatzabstreiferlippe 22 zunächst grössere und gegebenenfalls auf der Schiene 2 haftende Partikel entfernt werden, bevor die Abstreiferlippe der Stirnplatte die entsprechende Stelle der Schiene 2 passiert. Mit dem Abstreifer 13 der Stirnplatte 9 müssen dann nur noch kleine und Kleinstpartikel sowie Flüssigkeiten von der Schiene 2 abgestreift werden. In jeder Bewegungsrichtung des Wagens 3 wird somit stets zuerst die Schiene 2 abgestreift, bevor die Wälzkörper 4 auf die entsprechenden Stellen der Oberfläche der Schiene gelangen.

Der hier gezeigte Zusatzabstreifer 15 hat einen in den Figuren nicht näher dargestellten Aluminiumträger, an den die Kunststoff-Abstreiferlippe 22 angespritzt ist. Der Werkstoff der Zusatzabstreiferlippe 22 kann härter sein als der Werkstoff der Abstreiferlippe der Stirnplatte 9. Ein an den Aluminiumträger angespritzter und mit der Abstreiferlippe einstückig verbundener Kunststoffkörper 19 des Abstreifers 15 hat in Bezug auf Höhe und Breite im Wesentlichen die gleichen äusseren Abmessungen wie die Stirnplatte 9 und die Schmierplatte 11. Ebenso ist der Kunststoffkörper 19 des Zusatzabstreifers 15 mit zwei Positionierhülsen 20 (Fig. 6) und Positionierausnehmungen 21 (Fig. 1) versehen. Die Positionierhülsen 20 sind zum Eingriff in die Positionierausnehmungen der Schmierplatte 11 oder der Stirnplatte 9 vorgesehen.

Auf den Zusatzabstreifer 15 folgt schliesslich eine Federstahlklammer 27 (Fig. 1). Diese ist im Wesentlichen plattenförmig ausgebildet. Ebenso wie das bereits erörterte Zubehör weist auch die in Fig. 5 näher dargestellte Federstahlklammer 27 eine Ausnehmung 28 auf, deren Randverlauf zumindest etwa dem Querschnitt der Schiene 2 entspricht. Der Randverlauf ist hierbei so gewählt, dass im montierten Zustand der Linearbewegungsführung die Federstahlklammer 27 von oben über die Schiene "gestülpt" und an eine der Stirnseiten des Wagens angefügt werden kann.

Die Federstahlklammer ist an jeder Seite ihrer beiden seitlichen Kanten 31 mit einer Federlasche 30 versehen, die durch zwei horizontale Stanzungen 32 und eine Biegung um etwas weniger als 90° erzeugt ist. Eine Kante 33 der jeweiligen Biegung weist zur Längsbewegungsachse der Führung einen um einige wenige Millimeter grösseren Abstand auf, als die Seitenkanten 31, zu denen die Biegekanten 33 parallel ausgerichtet sind. Ein erster Schenkel 34 jeder Lasche 30 ist zwischen den beiden Stanzungen mit der Federstahlklammer 27 einstückig verbunden. Der ebene erste Schenkel ist zudem um einen relativ kleinen Winkel, beispielsweise 10°, aus der vom Federstahlklips gebildeten Ebene abgewinkelt.

Im Bereich der Biegekante 33 schliesst sich an den ersten Schenkel 34 ein zweiter Schenkel 35 der Federlasche 30 an. Ausgehend von der Biegekante 33 ist dieser zu den Laufflächen 2a der Schiene 2 hin geneigt. Zu seinem freien Ende hin weist der zweite Schenkel 35 von einer Knicklinie 36 an einen Endbereich 37 auf, der von der Schiene 2 weg geneigt ist.

In den zweiten Schenkel 35 ist zudem eine im Wesentlichen rechteckige Ausnehmung 38 eingebracht. Die Ausnehmung 38 befindet sich zwischen der Biegekante 33 und der Knicklinie 36, wobei eine vordere Begrenzungskante 39 der Ausnehmung 38 in unmittelbarer Nähe der Knicklinie 36 angeordnet ist. Die Ausnehmung 38 hat im Bereich der Begrenzungskante 39 eine näherungsweise halbkreisförmige Erweiterung 40, die sich in den Endbereich 37 des Schenkels 35 hinein erstreckt.

Wie den Fig. 1, 3 und 4 zu entnehmen ist, weisen sowohl die Stirnplatte 9, als auch die Schmierplatte 11 an jeder ihrer im Wesentlichen ebenen Seitenflächen 43 jeweils einen rampenartigen Vorsprung 44 auf. Dieser hat in Bezug auf die Richtung der Längsbewegungsachse 8 eine von der Seitenfläche 43 ausgehend geneigte Oberseite 45. Nach einem kurzen, parallel zur Seitenfläche verlaufenden Abschnitt 45a konstanter Dicke, bildet der Vorsprung 44 und die Seitenfläche 43 eine Hinterschneidung 46 aus. Eine senkrecht zur Längsbewegungsachse ausgerichtete Hinterschneidungsfläche 46a (Fig. 4) ist im Wesentlichen eben und mit einer konstanten Breite versehen.

An den Seitenflächen 43 der Schmierplatte 11 sind zudem Aufnahmen 47 zur Befestigung von einem Paar von Federbügeln 48 vorgesehen, von dem in den Fig. 1, 3 und 4 lediglich an einer der Seitenflächen 43 ein Federbügel 48 gezeigt ist. Diese Federbügel 48 weisen im Wesentlichen die gleiche geometrische Form auf, wie die zweiten Schenkel 35 der Federlaschen 30 der Federstahlklammer 27. Ebenso wie die letztgenannten sind auch die Federbügel 48 aus einem federelastischen Stahlblech hergestellt.

Durch die geometrische Gestaltung der Federlaschen 30 und der Federbügel 48 ergibt sich zwischen den jeweils beiden Knicklinien 36 der beiden Federlaschen 30 bzw. Federbügel 48 eine Öffnungsweite Aₘᵢₙ (Fig. 5), die geringer ist als die Breite B (Fig. 3) des Zusatzabstreifers 15, der Schmierplatte 11 und auch der Stirnplatte 9. Da die Federlaschen 30 in ihrem Endbereich eine Öffnungsweite aufweisen, die etwas grösser ist als die Breite B, können sie problemlos an das jeweilige Bauteil angesetzt und aufgeschoben werden, an dem die Federstahlklammer 27 befestigt werden soll.

Wird die Federstahlklammer 27 auf den Zusatzabstreifer 15 dann weiter aufgedrückt, so werden die Federlaschen 30 durch gegenläufige Auslenkungen auseinandergedrückt. Dies erzeugt in den Federlaschen 30 federelastische Rückstellkräfte, wodurch die Federlaschen 30 den Zusatzabstreifer zwischen sich einklemmen. Gelangt dann die Begrenzungskante 39 hinter die Hinterschneidungsfläche 46a des jeweiligen Vorsprungs 44, so schnappt die Federlasche 30 in ihre Entlastungsrichtung um einen Teilbetrag ihrer Auslenkung zurück. Die Federlaschen 30 klemmen mit einer Vorspannkraft die in Richtung der Längsbewegungsachse 8 jeweils vor ihnen angeordnete Funktionszubehöreinrichtung, je nach Anwendungsfall auch die Stirnplatte 9, zwischen sich ein. Zudem liegt die vordere Begrenzungskante 39 der Ausnehmung 38 gegen die zu ihr im Wesentlichen parallel verlaufende Hinterschneidungsfläche 46a an.

Prinzipiell Gleiches gilt für die Federbügel 48. Auch eine Öffnungsweite der beiden Federbügel 48 ist im Bereich ihrer Knicklinie 36 etwas geringer als die Breite der Stirnplatte 9, bzw. der Schmierplatte 11. Wird eine der Funktionszubehöreinrichtungen mit ihren Federbügeln 48 auf die Stirnplatte 9 oder eine andere Funktionszubehöreinrichtung aufgeschoben, so vergrössert sich die Öffnungsweite der beiden Federbügel 48, was in diesen elastische Rückstellkräfte erzeugt. Eine Befestigungsendlage erreichen die Federbügel 48, wenn die vorderen Begrenzungskanten 39 hinter die Hinterschneidungsflächen 46a gelangen und die Federbügel mit ihrem Endbereich gegen die Seitenflächen 43 schnappen.

Somit liegen in der Befestigungsendlage zwei Funktionszubehöreinrichtungen gegeneinander bzw. eine Funktionszubehöreinrichtung gegen eine der Stirnplatten 9 flächig aneinander an. In Richtung der Längsbewegungsachse 8 werden sie im Wesentlichen durch den Formschluss zwischen dem Federbügel 48 bzw. Federlaschen 30 und dem Vorsprung 44 aneinander gehalten. Quer zur Längsbewegungsachse werden sie hingegen vor allem durch den Kraftschluss zwischen den Federbügeln 48 bzw. Federlaschen 30 und dem jeweils vor ihnen angeordneten Kunststoffträgern lösbar fixiert.

### Bezugszeichenliste

- 1: Linearbewegungsführung
- 2: Profilschiene
- 2a: Laufflächen
- 3: Wagen
- 3a: metall. Grundkörper
- 4: Wälzkörper
- 5: Wälzkörperumlauf
- 6: Tragzone
- 7: Rücklaufkanal
- 8: Längsbewegungsachse
- 9: Stirnplatte
- 10: Positionierausnehmung
- 11: Schmierplatte
- 11a: Kunststoffträger
- 12: Material
- 13: Abstreifer
- 14 15: Abstreifer
- 16: Positionierhülsen
- 17: Positionierausnehmung
- 18: Schraube
- 19: Kunststoffkörper
- 20: Positionierhülse
- 21: Positionierausnehmung
- 22: Abstreiferlippe
- 23 24 25 26 27: Federstahlklammer
- 28: Ausnehmung
- 29 30: Federlasche
- 31: Seitenkante
- 32: Stanzung
- 33: Biegekante
- 34: erster Schenkel
- 35: zweiter Schenkel
- 36: Knicklinie
- 37: Endbereich
- 38: Ausnehmung
- 39: Begrenzungskante
- 40: Erweiterung
- 41 42 43: Seitenfläche
- 44: Vorsprung
- 45: Oberseite
- 45a: Abschnitt
- 46: Hinterschneidung
- 46a: Hinterschneidungsfläche
- 47: Aufnahme
- 48: Federbügel

## Patentansprüche

1. Zubehöreinrichtung für einen Wagen einer Linearbewegungsführung, insbesondere einer wälzkörperbasierten Linearbewegungsführung, bei der der Wagen auf einer Schiene angeordnet und relativ zu dieser beweglich ist, wobei die Zubehöreinrichtung ein Mittel aufweist, das zur Befestigung der Zubehöreinrichtung im Bereich einer der Stirnseiten des Wagens vorgesehen ist, **dadurch gekennzeichnet, dass** das Mittel als Bestandteile einer Schnappverbindung ausgebildet ist.

2. Zubehöreinrichtung nach Anspruch 1, **dadurch gekennzeichnet, dass** die Schnappverbindung ein federelastisches Mittel aufweist.

3. Zubehöreinrichtung nach einem oder beiden der vorhergehenden Ansprüche 1 oder 2, **dadurch gekennzeichnet, dass** das federelastische Mittel eine Federstahllasche aufweist.

4. Zubehöreinrichtung nach einem der vorhergehenden Ansprüche, **dadurch gekennzeichnet, dass** das federelastische Mittel in einer Richtung, die im Wesentlichen quer zu einer Längsbewegungsrichtung des Wagens verläuft, auslenkbar ist.

5. Zubehöreinrichtung nach Anspruch 2, **dadurch gekennzeichnet, dass** das federelastische Mittel mit einer als Durchbruch ausgebildeten Ausnehmung versehen ist.

6. Zubehöreinrichtung nach einem der vorhergehenden Ansprüche, **gekennzeichnet durch** eine Hinterschneidung, in die ein Bestandteil der Schnappverbindung eingreift.

7. Zubehöreinrichtung nach einem der vorhergehenden Ansprüche, **dadurch gekennzeichnet, dass** das Mittel an zumindest einer der Seitenflächen der Zubehöreinrichtung angeordnet ist.

8. Zubehöreinrichtung nach den vorhergehenden Ansprüchen 2 und 6, **gekennzeichnet durch** sowohl eine Hinterschneidung als auch ein federelastisches Mittel, die zwei unterschiedlichen Schnappverbindungen zugeordnet sind.

9. Zubehöreinrichtung nach einem der vorhergehenden Ansprüche, **gekennzeichnet durch** zumindest einen Abstreifer.

10. Zubehöreinrichtung nach einem der vorhergehenden Ansprüche, **gekennzeichnet durch** zumindest eine Schmierplatte.

11. Zubehöreinrichtung nach einem der vorhergehenden Ansprüche, **gekennzeichnet durch** einen plattenförmigen Federstahlklips, der eine Ausnehmung aufweist, die im Wesentlichen einer Querschnittsform der Schiene entspricht und der im Bereich seiner beiden seitlichen Ränder jeweils eine federelastische Lasche aufweist.

12. System von mehreren Funktionszubehöreinrichtungen, die jeweils an einer Stirnseite eines Wagens einer Linearbewegungsführung anbringbar sind, **gekennzeichnet durch** eine Ausbildung sämtlicher Funktionszubehöreinrichtungen gemäss Anspruch 1.

13. System nach Anspruch 12, **gekennzeichnet durch** zumindest eine erste Zubehöreinrichtung, die Bestandteile von zumindest zwei Schnappverbindungen aufweist, wobei die eine Schnappverbindung zur Befestigung der Zubehöreinrichtung am Wagen oder einem mit diesem verbundenen Bauteil und die andere Schnappverbindung zur Anordnung einer zweiten Zubehöreinrichtung an der ersten Zubehöreinrichtung vorgesehen ist.

14. System nach Anspruch 12, **dadurch gekennzeichnet, dass** beide Zubehöreinrichtungen Positionierhilfen aufweisen, die zur Ausrichtung der beiden Zubehöreinrichtungen relativ zueinander vorgesehen sind.

15. Wagen einer Linearbewegungsführung zur Anordnung auf einer Schiene, der hinsichtlich eines Querschnitts zumindest näherungsweise U-förmig gestaltet ist, der mit Wälzkörpern versehen ist, die bei einer Relativbewegung des Wagens gegenüber einer Schiene in mehreren Wälzkörperumläufen zirkulieren, wobei an zumindest einer Stirnseite des Wagens eine Stirnplatte anbringbar ist, die eine Zubehöreinrichtung enthält und/oder an der eine solche anbringbar ist, **gekennzeichnet durch** eine Zubehöreinrichtung gemäss Anspruch 1 und **durch** am Wagen oder an der Stirnplatte vorgesehene Bestandteile der Schnappverbindung, die mit den Bestandteilen der Schnappverbindung des Funktionszubehörs zur lösbaren Befestigung des Funktionszubehörs zusammenwirken.

16. Wagen nach Anspruch 15, **dadurch gekennzeichnet, dass** an zumindest einer Stirnseite des Wagens mehrere Zubehöreinrichtungen in Richtung der Längsbewegungsachse des Wagens hintereinander anbringbar sind, wobei die erste auf die Stirnplatte folgende Zubehöreinrichtung an der Stirnplatte anbringbar ist.

17. Wagen nach Anspruch 15 oder 16, **dadurch gekennzeichnet, dass** die Stirnplatte mit einem Abstreifer versehen ist.

18. Wagen nach einem der vorhergehenden Ansprüche 15 bis 17, **gekennzeichnet durch** einen Abstreifer, der in Bezug auf eine Längsbewegungsachse, hinter der Stirnplatte angeordnet ist.

19. Wagen nach Anspruch 18, **dadurch gekennzeichnet, dass** der Abstreifer zwischen der Stirnplatte und einem Befestigungsmittel des Abstreifers angeordnet ist, wobei das Befestigungsmittel vom Abstreifer körperlich getrennt ist und zu dessen Befestigung mittels einer Schnappverbindung den Abstreifer zwischen sich und der Stirnplatte oder einem weiteren Funktionszubehör einklemmt.
